**Europäisches Patentamt**

**European Patent Office**

**Office européen des brevets**

(19)

(11) Veröffentlichungsnummer : **0 340 204 B1**

(12) # EUROPÄISCHE PATENTSCHRIFT

(45) Veröffentlichungstag der Patentschrift :
**18.03.92 Patentblatt 92/12**

(51) Int. Cl.$^5$ : **F16D 35/00**

(21) Anmeldenummer : **89890102.0**

(22) Anmeldetag : **10.04.89**

(54) **Lamelle für Flüssigkeitsreibungskupplung.**

(30) Priorität : **27.04.88 AT 1068/88**

(43) Veröffentlichungstag der Anmeldung :
**02.11.89 Patentblatt 89/44**

(45) Bekanntmachung des Hinweises auf die
Patenterteilung :
**18.03.92 Patentblatt 92/12**

(84) Benannte Vertragsstaaten :
**DE FR GB IT**

(56) Entgegenhaltungen :
**EP-A- 0 015 643**
**DE-C- 896 009**
**US-A- 2 576 156**
**US-A- 4 049 100**

(73) Patentinhaber : **STEYR-DAIMLER-PUCH**
**AKTIENGESELLSCHAFT**
**Franz-Josefs-Kai 51**
**A-1010 Wien (AT)**

(72) Erfinder : **Binder, Hubert**
**Wichnergasse 33**
**A-8041 Graz (AT)**

## Beschreibung

Die Erfindung bezieht sich auf eine Lamelle für Flüssigkeitsreibungskupplungen, bestehend aus einer Scheibe mit schlitzoder lochförmigen Durchbrechungen.

Die Durchbrechungen in den Lamellen erhöhen das übertragbare Drehmoment, wobei diese Durchbrechungen meist in Form von zum Scheibenrand hin offenen Schlitzen oder Langlöchern ausgebildet sind. Wie die DE-A- 37 21 623 erkennen läßt, sind die Längsränder dieser Durchbrechungen glatt und die Begrenzungswände liegen in Normalebenen zu den Scheibenflächen, wobei es gemäß der DE-A- 36 27 504 auch bekannt ist, entlang der Schlitzlängsränder Verdickungen anzuordnen, um den Betriebszustand der Mischreibung (Flüssigkeits- und Festkörperreibung) in der Flüssigkeitsreibungskupplung zu verstärken. Durch diese Verdickungen, aber auch durch herstellungsbedingte Grate beim Stanzen oder Fräsen der Durchbrechungen soll der aus der viskosen Füllflüssigkeit der Kupplung gebildete Film von der jeweils benachbarten Lamelle abgestreift und das Erreichen des gewünschten Betriebszustandes erleichtert werden. Allerdings kommt es durch diese vorstehenden Verdickungen und Grate zwischen benachbarten Lamellen zu erhöhten Flächenpressungen, die einen verstärkten Lamellenverschleiß bedingen, und ohne diese vorstehenden Bereiche wird nicht nur der Mischreibungszustand verschlechtert, sondern auch die gegenseitige Zuordnung der Lamellen beeinträchtigt, so daß meist nur wenige Lamellen tatsächlich für die Momentenübertragung zur Verfügung stehen, was wiederum den Verschleiß dieser übermäßig belasteten Lamellen intensiviert.

Aus der US-A 40 49 100 ist zwar eine Flüssigkeitsreibungskupplung mit Kupplungsscheiben bekannt, die schräg zur Scheibenfläche verlaufende Durchbrechungen aufweisen. Deren spitzwinkeliger Randbereich ist jedoch von der Reibfläche abgewandt, weil diese der Zufuhr von Flüssigkeit dienen, um ein vom Schlupf unabhängiges übertragenes Drehmoment zu gewährleisten.

Der Erfindung liegt die Aufgabe zugrunde, eine Lamelle der eingangs geschilderten Art zu schaffen, die für ein schnelles Erreichen des gewünschten Betriebszustandes sorgt und sich durch ihre besonders hohe Standzeit auszeichnet.

Die Erfindung löst diese Aufgabe zusammen mit den kennzeichnenden Merkmalen des Anspruchs 1. Diese Schräglage der Begrenzungswände verursacht bei einer Relativbewegung zwischen Lamelle und viskoser Flüssigkeit das Auftreten von Axialkräften, die das gegenseitige Zuordnen und das Anlegen an eine benachbarte Lamelle entscheidend verbessern, sodaß alle Lamellen an der Drehmomentübertragung teilhaben und eine gleichmäßige Aufteilung der übertragungsbedingten Belastungen auf alle Lamellen erfolgt. Die funktionsgerecht aneinanderliegenden Lamellen führen auch ohne vorstehende Teile zum gewünschten Betriebszustand, der Mischreibungseffekt, der sogenannte Hump, wird verbessert und gleichzeitig bei Belastung der einzelnen Lamellen verringert. Diese geringere Lamellenbelastung genauso wie die glatte Lamellenoberfläche führen zu einer praktisch verschleißfreien Lamelle höchster Standzeit. Die Schräglage der Begrenzungswände erstreckt sich vorteilhafterweise über die gesamte Länge der Schlitz- oder Lochränder, sie bringt aber auch schon Vorteile mit sich, wenn die Begrenzungswände beispielsweise nur an einer Längsseite der Durchbrechungen oder auch nur abschnittweise entlang der Ränder schräg verlaufen.

Wie Versuche ergaben, steigt der Schräglageneffekt der Begrenzungswände mit zunehmender Neigung, wobei es sich bisher unter Berücksichtigung der Herstellungsmöglichkeiten und Festigkeitseigenschaften als besonders günstig erwiesen hat, wenn die Begrenzungswände um einen Winkel von ca. 6° bis 9° (Grad) zur Normalen auf die Scheibenflächen geneigt sind.

Nach einer besonders vorteilhaften Ausgestaltung der Erfindung sind herstellungsbedingte Grate im spitzwinkeligen Randbereich der Begrenzungswände zu den Durchbrechungen hin umgelegt. Das Stanzen, aber auch Fräsen der Durchbrechungen führt jeweils auf einer Scheibenseite zu mehr oder weniger starken Graten entlang der Durchbrechungsränder, die sich zu einer Steigerung des Schräglageneffektes nützen lassen, indem sie durch Rollen od.dgl. umgelegt werden und in die Öffnungen der Durchbrechungen vorragen. Diese umgelegten Grate ergeben keine über die Scheibenebene hochstehenden Teile, sie verschleißen daher nicht und ermöglichen durch geeignete Abstimmung mit der Neigung der schrägen Begrenzungswände eine optimale Axialkraftwirkung.

Um ohne Beeinträchtigung der Verschleißfestigkeit unmittelbar auch den Hump, also den Mischreibungszustand beeinflussen zu können, sind erfindungsgemäß die Begrenzungswände grobbearbeitet und weisen vorzugsweise eine Oberflächen-Rauhigkeit mit einer Rauhtiefe von 5 bis 15 µm (Mikrometer) auf. Es hat sich überraschend herausgestellt, daß eine solche bewußt Oberflächen-Rauhigkeit, die etwa durch ein Grobschleifen der Begrenzungswände entsteht, ein Abreißen der viskosen Flüssigkeit von der Gegenlamelle begünstigt, was das Erreichen des Betriebszustandes der Mischreibung fördert.

In der Zeichnung ist der Erfindungsgegenstand anhand eines Ausführungsbeispieles schematisch veranschaulicht, und zwar zeigen

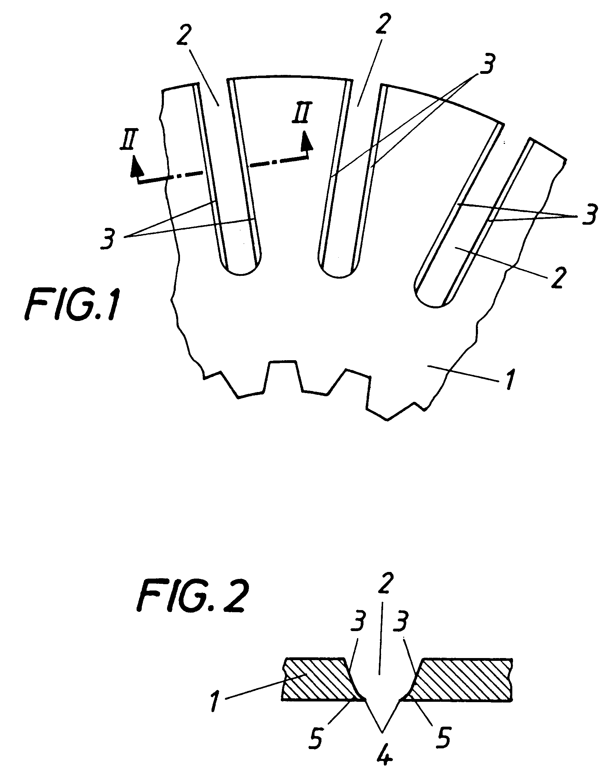

Fig. 1 einen Teil einer erfindungsgemäßen Lamelle in Stirnansicht und

Fig. 2 einen Querschnitt nach der Linie II-II der Fig. 1 größeren Maßstabes.

Eine Innenlamelle 1 einer Flüssigkeitsreibungskupplung, also eine Lamelle, die mit einer Mehrzahl gleicher Lamellen drehfest auf der in einem mit viskoser Flüssigkeit gefüllten Gehäuse gelagerten Kupplungswelle sitzt und mit zwischen die Innenlamellen eingreifenden, drehfest im Kupplungsgehäuse angeordneten Außenlamellen zusammenwirkt, bestehend aus einer Scheibe, die zur Erhöhung des übertragbaren Drehmomentes Durchbrechungen in Form radialer, zum Außenrand hin offener Schlitze 2 aufweist. Die Begrenzungswände 3 der Schlitze 2 verlaufen schräg zur Scheibenfläche, so daß sich ein trapezförmiger Querschnitt der Schlitze 2 ergibt. Herstellungsbedingte Grate 4 in den spitzwinkeligen Randbereichen 5 der Schlitze 2 sind dabei jeweils zum Schlitz hin umgelegt, was beispielsweise durch eine Rollbearbeitung der Scheibenoberfläche erfolgt.

Die Schräglage der Begrenzungswände 3 gegenüber der Scheibenfläche bringt eine Axialbelastung der Lamellen mit sich, die das ordnungsgemäße Zueinanderfinden der ineinandergreifenden Lamellen begünstigt. Um dabei auf einfache Weise den Mischreibungseffekt, den sogenannten Hump, zu fördern, können die Begrenzungswände 3 etwa durch Grobschleifen bewußt mit einer bestimmten Oberflächen-Rauhigkeit bearbeitet sein, die einer Filmbildung an den Lamellenoberflächen entgegenwirkt.

## Patentansprüche

1. Lamelle für Flüssigkeitsreibungskupplungen, bestehend aus einer Scheibe mit schlitz- oder lochförmigen Durchbrechungen (2), <u>dadurch gekennzeichnet</u>, daß die Begrenzungswände (3) der Durchbrechungen (2) wenigstens bereichsweise derart schräg zur Scheibenfläche verlaufen, daß sie mit dieser im Randbereich einen splitzen Winkel belden, der der benachbarten Lamelle zugewandt ist.

2. Lamelle nach Anspruch 1, <u>dadurch gekennzeichnet</u>, daß die Begrenzungswände (3) um einen Winkel von ca. 6° bis 9° (Grad) zur Normalen auf die Scheibenfläche geneigt sind.

3. Lamelle nach Anspruch 1 oder 2, <u>dadurch gekennzeichnet</u>, daß herstellungsbedingte Grate (4) im spitzwinkeligen Randbereich (5) der Begrenzunswände (3) zu den Durchbrechungen (2) hin umgelegt sind.

4. Lamelle nach einem der Ansprüche 1 bis 3, <u>dadurch gekennzeichnet</u>, daß die Begrenzungswände (3) grobgearbeitet sind und vorzugsweise eine Oberflächen-Rauhigkeit mit einer Rauhtiefe von 5 bis 15 μm (Mikrometer) aufweisen.

## Claims

1. A blade for liquid friction couplings, which blade consists of a disk formed with slot- or holelike apertures (2), <u>characterized in that</u> the boundary surfaces (3) of the apertures (2) are at least in part are so inclined relative to the surface of the disk that in the edge portion they define with that surface an acute angle, which faces the adjacent blade.

2. A blade according to claim 1, characterized in that the boundary surfaces (3) are inclined at an angle of about 6 to 9 degrees from a normal on the surface of the disk.

3. A blade according to claim 1 or 2, characterized in that burrs (4) formed during the manufacture in the acute-angled edge portion (5) of the boundary surfaces (3) are inturned towards the apertures (2).

4. A blade according to any of claims 1 to 3, characterized in that the boundary surfaces (3) are machined to a rough finish and preferably have a peak-to-valley height of 5 to 15 μm (micrometers).

## Revendications

1. Disque pour visco-coupleur transmettant un couple, consistant en un disque avec des parties découpées (2) en forme de fente ou de trou, caractérisé en ce que les faces limitantes (3) des parties découpées (2) s'étendent, au moins par zones, obliquement par rapport à la surface du disque, de telle sorte qu'elles font un angle aigu avec celle-ci dans la région du bord qui est tournée vers le disque voisin.

2. Disque selon la revendication 1, caractérisé en ce que les parois limitantes (3) sont inclinées d'un angle de 6° à 9° environ (degré) par rapport à la normale à la surface du disque.

3. Disque selon la revendication 1 ou 2, caractérisé en ce que des bavures (4) dues à la fabrication dans la région du bord (5) à angle aigu des faces limitantes (3) sont rabattues vers l'intérieur des parties découpées (2).

4. Disque selon l'une des revendications 1 à 3, caractérisé en ce que les faces limitantes (3) sont travaillées grossièrement et présentent préférablement une rugosité de surface ayant une profondeur de rugosités de 5 à 15 μm (micromètres).

FIG.1

FIG. 2